# FASCICULE DE BREVET EUROPEEN

(11) **EP 3 202 115 B1**
(45) Date de publication et mention de la délivrance du brevet: **19.05.2021**
(21) Numéro de dépôt: 15774913.6
(22) Date de dépôt: 02.10.2015
(51) Int. Cl.: H04L 29/08, G06F 3/14, G06F 9/44, G06Q 10/10, G06F 9/451, G06Q 10/06, G09G 5/14, G06F 16/28

(54) **PROCÉDÉ ET DISPOSITIF DE MISE EN RELATIONS D'UN ENSEMBLE D'INFORMATIONS**
VERFAHREN UND VORRICHTUNG ZUM VERBINDEN EINER GRUPPE AN INFORMATIONSELEMENTEN
METHOD AND DEVICE FOR CONNECTING A GROUP OF INFORMATION ITEMS

(30) Priorité: 02.10.2014 FR 1459449; 05.12.2014 FR 1461993
(43) Date de publication de la demande: 09.08.2017
(73) Titulaire: IMMERSION, 33100 Bordeaux (FR)
(72) Inventeur: DE LA RIVIERE, Jean-Baptiste, F-33000 Bordeaux (FR); BIASIOLO, Nicolas, F-33320 Eysines (FR)
(74) Mandataire: Ipside
(86) Numéro de dépôt international: PCT/EP2015/072771
(87) Numéro de publication internationale: WO 2016/050949

(56) Documents cités:
- US-A1- 2014 067 804
- PRAKASH A ET AL: "DISTVIEW: SUPPORT FOR BUILDING EFFICIENT COLLABORATIVE APPLICATIONSUSING REPLICATED OBJECTS", CSCW. PROCEEDINGS OF THE CONFERENCE ON COMPUTER SUPPORTEDCOOPERATIVE WORK, XX, XX, 1 octobre 1994 (1994-10-01), pages 153-164, XP002943941,

## Description

La présente invention appartient au domaine du traitement de l'information.

Plus particulièrement l'invention concerne un procédé de traitement d'un ensemble d'informations dans lequel des liens entre des informations sont établis en fonction d'interactions réalisées par des opérateurs et concerne un dispositif pour visualiser un ensemble d'informations et pour interagir avec cet ensemble d'informations visualisées.

Plus particulièrement le traitement d'un ensemble d'informations suivant le procédé est réalisé en fonction d'interactions entre les informations et des opérateurs manipulant les dites informations.

Dans le domaine du traitement de l'information par un opérateur humain ou un groupe de personnes, il est généralement admis que les informations sont consultées et classées suivant des critères plus ou moins subjectifs d'un intérêt que chaque opérateur identifie dans une information par rapport à une problématique abordée.

Le plus souvent l'information est placée sur une échelle d'intérêt qui conduit les opérateurs à consulter les informations, les trier, leur conférer une note de valeur, les annoter, les dupliquer, les classer ... et le plus souvent à réaliser des synthèses.

Les opérateurs disposent aujourd'hui de nombreux moyens informatiques qui leurs permettent de réaliser ces opérations avec une certaine performance, tant pour l'affichage des informations que pour le partage des informations entre plusieurs opérateurs, ainsi que pour la prise de note.

Toutefois, il est avec ces méthodes difficile aux opérateurs d'avoir rapidement une vue objective de l'ensemble des informations traitées et des relations pouvant exister entre ces informations, en particulier dès que le nombre d'informations devient important, en pratique supérieur à quelques dizaines.

Il est en outre fastidieux de visualiser simultanément des informations issues de différentes sources et qui peuvent se présenter sous des formes et sous des formats numériques différents.

Sur le plan des moyens matériels, des solutions comme le dispositif CLICKSHARE de la société BARCO répond partiellement à cette limitation. Dans ce dispositif, tous les terminaux informatiques nécessaires au partage de l'information passent par un ensemble de boîtiers additionnels avant d'être reliés à un dispositif d'affichage de grande taille, permettant ainsi à plusieurs opérateurs d'afficher leurs informations accessibles sous forme numériques côte à côte.

Toutefois un tel dispositif se limite à afficher des recopies d'écrans côte à côte et ne permet pas de manipulation avancée ou d'analyse objective des contenus qui y sont affichés.

Le ou les opérateurs sont laissés à eux-mêmes pour s'assurer que l'intégralité des informations qu'ils ont jugées potentiellement nécessaires avant ou au cours de la réflexion est effectivement exploitée au bon moment et relativement à d'autres informations qui seraient complémentaires.

Pour assister les autres opérateurs dans la gestion et l'organisation des informations et conserver leurs contributions liées à une réflexion, un ou plusieurs opérateurs peuvent isoler, hiérarchiser, classer et organiser, sous forme de graphes, les différents éléments (idées, contenus, questions...) qu'ils voient en lien avec la réflexion.

Le document WO2008103436 par exemple décrit un système permettant de synchroniser les informations dans une carte conceptuelle avec celles présentes dans différents logiciels en relation.

Le document WO2013070930 décrit un procédé d'édition et de synchronisation de carte conceptuelle collaborative.

Ces méthodes et dispositifs présentent cependant l'inconvénient de produire des graphes subjectifs qui sont construits consciemment, au moins partiellement, par un ou plusieurs opérateurs, en parallèle de discussions éventuellement conduites avec d'autres opérateurs.

D'autres méthodes connues établissent des liens relationnels entre des documents à partir des opérations réalisés sur les données contenues dans des documents, d'où il résulte des graphes linéaires, d'un ensemble par ailleurs non fini d'opérations possibles sur les données. De telles méthodes nécessitent des interactions sur les contenus et n'établissent pas de liens relationnels entre des contenants des informations, au moins autrement que par les opérations réalisées sur les données contenues dans un contenant d'informations.

Il est aussi connu du document US 2014067804 A1 d'enregistrer des historiques d'opérations réalisées sur des données et d'attribuer des scores aux historiques d'opérations qui sont utilisés pour reconstruire des flux d'opérations sur les données de manière plus efficace. »

Il ressort que de telles méthodes et dispositifs ne produisent pas une représentation de la façon dont des connaissances auront été exploitées au cours d'une réflexion et n'assistent en aucune façon les opérateurs dans leur exploitation de ces connaissances.

La présente invention concerne un procédé et un dispositif qui évitent les inconvénients des dispositifs et méthodes connus mis en œuvre dans le cas de travail collaboratif en réunion.

Suivant le procédé de l'invention, des sources d'informations, d'un ensemble de sources d'informations référencées dans une base de contenants et de sources d'informations, sont mises en relation. Des contenants d'informations générés à partir des sources d'informations sont affichés sur des moyens d'affichage et manipulés à l'aide de moyens d'interface, par un ou plusieurs opérateurs au cours d'une session, en mettant en œuvre un dispositif permettant aux opérateurs de réaliser des opérations sur les contenants d'informations, un contenant d'informations correspondant à une forme de présentation unitaire d'informations, à l'usage d'un opérateur, offrant une représentation visuelle d'une information numérique.

En outre, toute opération réalisée par un opérateur sur un contenant d'informations, et appartenant à un type d'opérations identifié dans une nomenclature d'opérations prédéfinies, est enregistrée par le dispositif dans un registre des opérations sur les contenants d'informations d'un système de traitement numérique du dispositif, et un traitement du registre des opérations sur les contenants d'informations par le système de traitement numérique détermine des liens relationnels entre les sources d'informations.

Il ainsi obtenu qu'un ensemble de données est manipulé par les opérateurs intuitivement et naturellement sous la forme de contenants et que des liens relationnels objectifs entre les sources d'informations sont établis sans nécessiter d'interprétation subjective par les opérateurs.

Avantageusement, le procédé comporte une étape préalable d'initialisation de la base de contenants d'informations et de sources d'informations de sorte qu'il est défini un référentiel de sources d'informations pour une séance de travail, au moins initialement, et un ensemble de contenants d'informations à manipuler par les opérateurs.

Avantageusement, la nomenclature d'opérations prédéfinies sur les contenants d'informations comporte tout ou partie des opérations de :
- Création d'un contenant d'informations suite à l'envoi d'une information numérique vers le dispositif ou d'une référence vers une source d'information ;
- Sélection d'un contenant d'informations pour affichage visuel de son contenu ;
- Manipulation de la représentation visuelle d'un contenant d'informations ;
- Manipulation de la représentation visuelle d'un contenu d'un contenant d'informations ;
- Duplication d'un contenant d'informations ;
- Enrichissement d'un contenant d'informations ;
- Fermeture de la représentation visuelle d'un contenant d'informations ;
- Edition du contenu d'un contenant d'informations ;
- Création manuelle de liens entre contenants d'informations ;
- Envoi d'un contenant d'informations sur une autre surface d'affichage, locale ou distante.

Dans une mise en œuvre du procédé, une ou plusieurs des opérations enregistrées dans le registre des opérations sur les contenants d'informations comporte au moins un argument de structure définie dans la nomenclature d'opérations sur les contenants d'informations.

Les valeurs attribuées à un argument sont déterminées par le système de traitement numérique en fonctions de conditions de réalisation de l'opération, sur un contenant d'information, considérée observables par le système de traitement numérique.

Il est ainsi mémorisé dans le registre des opérations sur les contenants d'informations les conditions dans lesquelles une opération sur un contenant d'information est effectuée aux fins de traçabilité et d'analyse.

Avantageusement, tout ou partie des liens relationnels résultant du traitement du registre des opérations sur les contenants d'informations est une relation entre au moins deux sources d'informations de type :
- **"antériorité"** lorsque les noms de deux sources d'informations sont identiques mais que les contenus affichés dans les deux contenants d'informations ont évolués entre un premier et un second affichage ;
- **"séquentiel"** entre deux sources d'informations dont les deux contenants d'informations ont été sujets à des interactions d'au moins un utilisateur avec ledit contenant d'informations de façons consécutives ;
- **"parallèle"** entre les sources d'informations dont les contenants d'informations subissent des interactions d'au moins un utilisateur de façons simultanées ;
- **"spatiale"** entre les sources d'informations dont les contenants d'informations sont volontairement rapprochés par au moins un utilisateur ;
- **"usage"** entre deux sources d'informations dont une majeure partie des temps d'affichage de contenants associés s'est produite sur une même période d'une durée prédéfinie ;
- **"superposition"** entre des sources d'informations lorsque des contenants d'informations correspondant à ces sources ont été superposés les uns aux autres et associés à des paramètres de transparence permettant de percevoir les informations de couches inférieures à travers des couches supérieures superposées aux couches inférieures ;
- **"annotation"** entre deux sources d'informations lorsque une annotation manuelle a été réalisée par au moins un utilisateur entre des contenants d'informations associés auxdites sources ;
- **"capture"** entre des sources d'informations dont des contenants d'informations associés sont tous inclus dans une unique capture d'écran réalisée par un opérateur sur des contenants d'informations correspondant à ces sources ;
- **"hiérarchique"** entre deux sources d'informations dont l'une est le résultat d'une extraction d'un contenant d'informations extrait de l'autre contenant d'information correspondant à la source initiale ;
- **"ensembliste"** entre chacune des sources d'informations dont les contenants d'informations correspondant à ces sources auront été identifiés manuellement par les utilisateurs au moyen d'un élément de l'interface du dispositif ;
- **"informationnel"** entre deux sources d'informations dont l'une est de type fichier texte/annotation, et qui aura été associée à l'autre ;
- **"interaction"** entre les différentes sources d'informations entre lesquelles les interactions sur des contenants d'informations correspondant à ces sources sont partagées grâce à une fonction associée dans l'interface ;
- **"conditionnel"** entre deux sources d'informations dont des contenants d'informations correspondant à ces sources correspondent à deux hypothèses différentes ouvrant une alternative.

Dans un mode de mise en œuvre, une relation **"vide"** est associée à toute source d'informations de la base de contenants d'informations et de sources d'informations n'ayant pas été manipulé au cours d'une session, permettant de prendre en considération des sources d'informations n'ayant pas été considérées.

Pour une exploitation rapide des liens relationnels identifiés par le procédé, le traitement du registre des opérations sur les contenants d'informations par le système de traitement numérique pour déterminer des liens relationnels entre les sources d'informations est réalisé automatiquement par le système de traitement numérique au cours d'une même session après chaque enregistrement d'une opération sur un contenant d'information dans le registre des opérations, ou de manière récurrente pendant une session à des intervalles de temps ou de nombre d'enregistrements d'opérations définis.

Avantageusement pour en faciliter la lecture, les liens relationnels sont traités par le système de traitement numérique ou par un système de traitement numérique annexe du dispositif pour construire une représentation visuelle de tout ou partie des relations, ladite représentation visuelle pouvant être affichée de manière interactive sur un système de visualisation.

Pour la mise en œuvre du procédé, le dispositif de mise en relation d'un ensemble d'informations de l'invention comporte un système de traitement numérique, une base de contenants d'informations et de sources d'informations, des moyens d'affichage et des moyens d'interface, pour permettre à un opérateur d'agir sur le fonctionnement du dispositif, interconnectés fonctionnellement.

Le système de traitement numérique comporte un ou plusieurs processeurs, des mémoires de données et des mémoires de programmes, et comporte des moyens de connexion à la base de contenants d'informations et de sources d'informations, aux moyens d'affichage et aux moyens d'interface, lesdits processeurs, mémoires et moyens de connexion étant connectés à un ou des bus de communications internes pour échanger des instructions et ou des données.

En outre, le système de traitement numérique est architecturé et comporte des mémoires d'instructions de programmes pour constituer fonctionnellement :
- au moins une unité d'administration connectée à la base de contenants d'informations et de sources d'informations et en charge de la gestion des contenants d'informations de ladite base ;
- au moins une unité de gestion d'affichages connectée aux moyens d'affichage pour afficher des contenus de contenants d'informations et le résultats d'action d'opérateurs sur les dits contenus ou contenants d'informations, un contenant d'informations correspondant à une forme de présentation unitaire d'informations, à l'usage d'un opérateur, offrant une représentation visuelle d'une information numérique;
- au moins une unité d'interprétation des interactions connectée aux moyens d'interface pour interpréter les actions réalisées par des opérateurs sur lesdits moyens d'interface ;
- au moins une unité de traitement des opérations organisée pour analyser les actions réalisées par des opérateurs sur lesdits moyens d'interface, identifier parmi lesdites actions celles qui correspondent à une opération sur un contenant d'information prédéfinie répertoriée dans une nomenclature d'opérations sur les contenants d'informations prédéfinies, et enregistrer chaque opération sur un contenant d'information identifiée dans un registre des opérations sur les contenants d'informations ;
- au moins une unité de synthèse réalisant une interprétation des opérations sur les contenants d'informations et de leurs enchaînements pour identifier des liens relationnels entre des sources d'informations.

Il est ainsi apporté à un opérateur tous les moyens lui permettant d'agir sur des contenants d'informations et les capacités de mémorisation et de traitement des opérations sur les contenants d'informations, conscientes ou inconscientes, résultant des interactions de l'opérateur avec les contenants d'informations.

Dans une forme de réalisation, le système de traitement comporte au moins une unité d'action ou est connecté fonctionnellement à une unité d'action externe, ladite au moins une unité d'action étant organisée sur les plans matériels et logiciels pour agir sur les contenus des contenants d'informations et en particulier pour afficher et ou modifier lesdits contenus. Il est ainsi apporté à un opérateur la possibilité de modifier un contenu d'informations et de créer ainsi un nouveau contenu d'informations enrichi.

Pour étendre les capacités du dispositif à des opérateurs plus ou moins distants en maintenant les conditions d'un travail collaboratif sur les mêmes sources d'informations et avec une présentation homogène et interactive entre les différents opérateurs, le système de traitement numérique comporte au moins une unité de communication configurée pour permettre la connexion d'un ordinateur en tant que terminal d'affichage du dispositif et ou en tant que moyen d'interface du dispositif, et ou pour permettre la connexion d'au moins un dispositif distant conforme au dispositif de sorte que les au moins deux dispositifs fonctionnent en mode miroir.

La description de l'invention est faite en référence aux figures qui représentent de manière schématique et de manière non limitative :
- Figure 1 :: une représentation d'un exemple de dispositif pour la mise en relation d'un ensemble d'informations manipulées par au moins un opérateur ;
- Figure 2 :: un synoptique simplifié du procédé de mise en relation d'un ensemble d'informations manipulées par au moins un opérateur ;

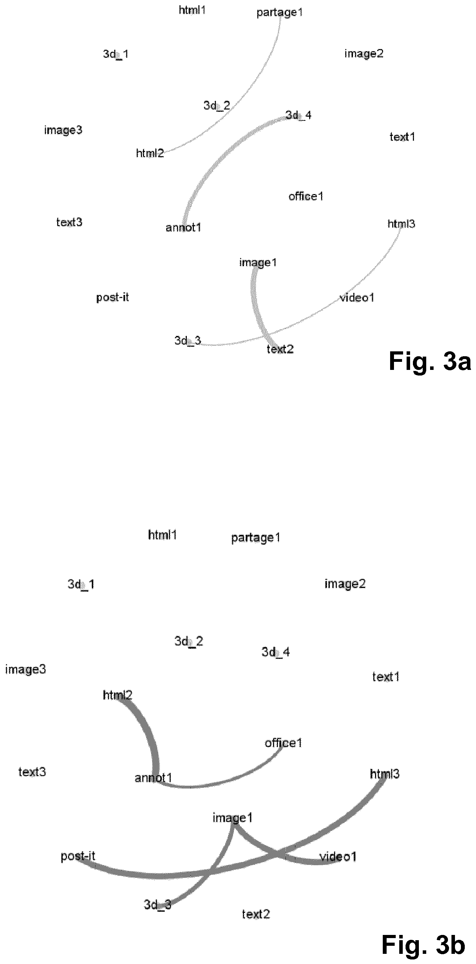

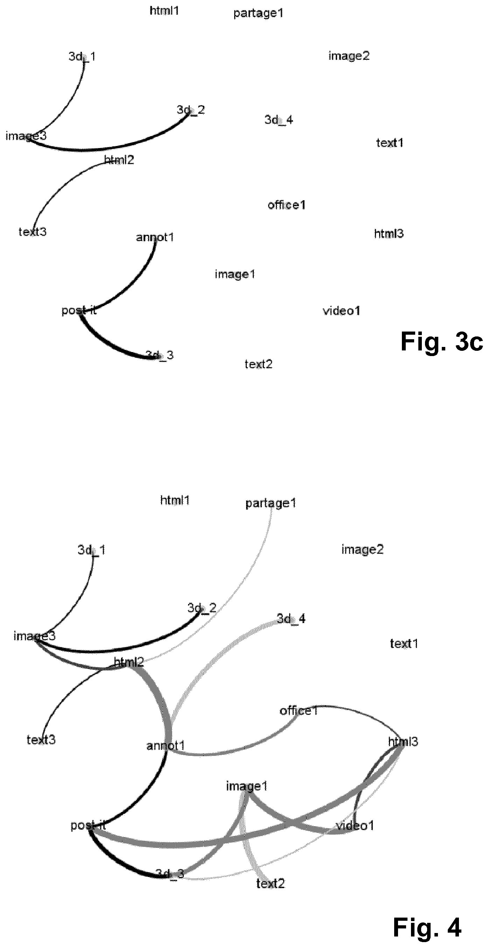

- Figures 3a, 3b et 3c :: des exemples de représentations de liens fonctionnels tels qu'établis par le procédé en fonction d'opérations réalisées par un opérateur sur les contenants d'informations, chaque figure correspondant à un type de liens fonctionnels ;
- Figure 4 :: un exemple de représentation globale de liens fonctionnels comportant sur une même représentation des liens fonctionnels de plusieurs types.

Le procédé de l'invention vise à établir des liens entre un ensemble d'informations par un traitement de la manière dont chaque contenant d'informations est manipulé lors d'une phase au cours de laquelle un ou plusieurs opérateurs vont utiliser ou non les informations.

Dans la suite de la description il sera utilisé l'expression "contenant d'informations" pour désigner de manière générique toute forme de présentation unitaire d'informations à l'usage d'un opérateur. Un contenant d'informations correspond par exemple à une surface graphique, une portion d'écran, un ensemble de pixels, ... dans lequel est affichée une représentation visuelle d'une information numérique et un ensemble d'éventuels décorations et éléments graphiques délimitant la région occupée par l'information et à l'intérieur duquel ensemble de décorations et éléments graphiques est souvent affichée la représentation visuelle de l'information numérique.

Un contenant d'information peut ainsi être, par exemple, une fenêtre telle qu'utilisée dans les systèmes d'exploitation de type WIMP (Windows, Icons, Menus, Pointing device) et permettant d'afficher un document de texte au milieu d'un certain nombre de fonctions accessibles par des boutons et/ou des menus, une image affichée en plein écran sans aucune décoration, une icône générique associée à un nom de fichier, une information affichée au milieu d'autres informations et associée à des éléments d'interface spécifiques sur une table tactile, une miniature pouvant être sélectionnée pour accéder plus précisément à une information...

Sur tout écran d'affichage, un contenant adapté est ainsi systématiquement créé pour contenir la représentation visuelle d'une information en fonction de son type : image, vidéo, document texte, tableau, 3D, page internet... ou encore toute combinaison possible de types.

Il sera utilisé l'expression "source d'information" pour désigner l'origine de toute information numérique à même d'être accédée puis interprétée, par exemple par incorporation de codes informatiques, pour en offrir à l'utilisateur, via un contenant d'informations tel que décrit ci-dessus de manière générique, une représentation visuelle.

A titre non limitatif, une source d'information peut ainsi être un fichier local ou distant en regard d'un dispositif sur lequel opèrent un ou plusieurs opérateurs, un fichier texte, un fichier de valeurs alphanumériques structurées en tableau, une base de données, un fichier CAO de formes 2D ou 3D, une url, une adresse IP d'un système informatique mettant à disposition un ou plusieurs services spécifiques tel un partage vidéo du contenu affiché au travers de son écran.

En pratique, par exemple lors d'une séance de travail pendant laquelle des informations de diverses sources d'information et ou de divers types sont à la disposition de personnes ou opérateurs participant à la séance de travail, chaque personne ou opérateur peut être conduit à intervenir sur des informations en effectuant des opérations sur le ou les contenants d'informations associés aux dites informations.

Par exemple un opérateur peut consulter un contenu d'un contenant d'informations, par exemple un contenant d'informations incorporant la représentation visuelle d'un document, peut le soumettre à un autre opérateur, peut compléter le document par un enrichissement de son contenu ou par des informations complémentaires.

Par exemple, un opérateur peut également utiliser des outils du dispositif lui permettant d'agrandir ou de diminuer les dimensions apparentes d'un contenant d'informations visualisé, pour augmenter ou pour diminuer une surface visuelle occupée par le contenu associé audit contenant d'informations, pour déplacer un contenant d'informations afin de l'afficher de manière à favoriser la visualisation de son contenu par une personne ou un opérateur, pour mettre à jour la représentation visuelle de l'information en changeant de page sur une information textuelle ou de point de vue sur l'information 3D, ou encore pour dupliquer un contenant d'informations afin de réaliser une ou des visualisations du contenu spécifiques à l'intention d'autres personnes ou d'autres opérateurs.

Dans tous les cas, pour effectuer ces opérations, l'opérateur met en œuvre des moyens à sa disposition, en particulier, dans le contexte de l'invention, des moyens informatiques de partage, de mémorisation, d'interaction et d'affichage des informations, avantageusement adaptés au contexte d'un travail collaboratif entre plusieurs opérateurs. Un exemple d'architecture de tels moyens informatiques sera décrit ultérieurement dans le cadre d'un dispositif de l'invention.

Les opérations sur les contenants d'informations pouvant être réalisées par les opérateurs sont par exemple :
- la création et la mise à jour d'une base de données de contenants et de sources d'informations ;
- la sélection de contenants d'informations de la base de données ou accessibles depuis d'autres sources ;
- l'affichage des informations d'un ou plusieurs contenants d'informations, par exemple à des fins de présentations, de consultations ou de comparaisons ;
- la modification d'une représentation visuelle du contenu d'un contenant d'information, par exemple l'orientation d'un objet visualisé en trois dimensions dans un espace virtuel ;
- la modification de l'information d'un contenant d'informations, par exemple à des fins de correction ou à des fins d'enrichissement ;
- le classement de contenants d'informations ;
- la création et ou le référencement d'une nouvelle source d'informations et son ajout à la base de données, par exemple à partir de la capture d'un sous-ensemble des informations affichées ;
- la création d'attributs associés à une source d'information, par exemple un code de pertinence, par exemple une information de rattachement à d'autres informations ...

Dans la présente description, lorsqu'il sera utilisé le terme « opération » il devra être compris, sauf précision ou évidence contraire, qu'il est fait référence à des opérations sur les contenants d'informations.

Il doit être noté que la liste précédente d'opérations sur des contenants d'informations n'est pas exhaustive mais donne des exemples de types d'opérations pouvant être associées à un contenant et ou une source d'informations, et que ces opérations peuvent être caractérisées indépendamment des contenants et ou sources d'informations eux-mêmes, à plus forte raison des contenus des dits contenants, et d'une importance qui pourrait leurs être attribuée par un ou des opérateurs.

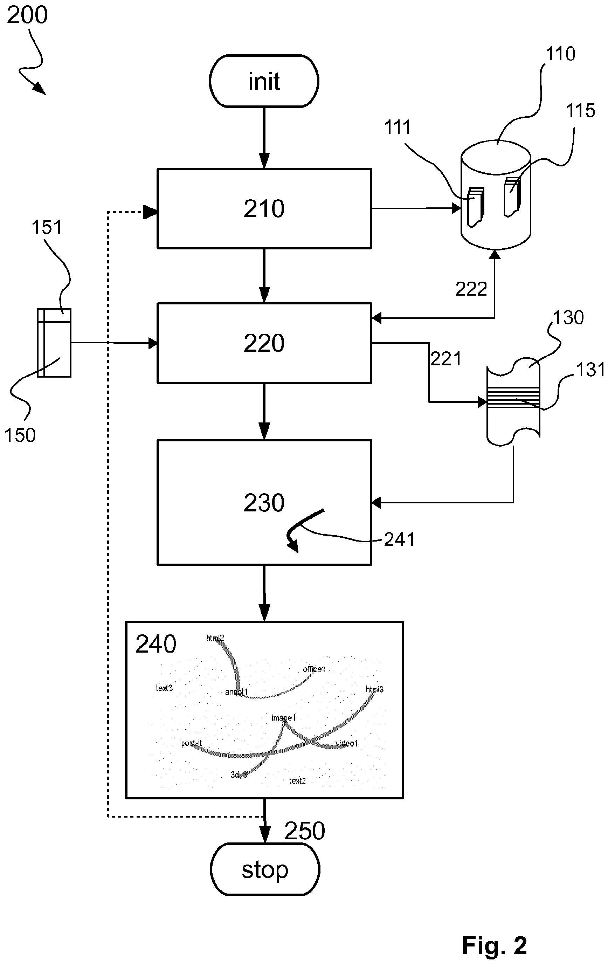

Suivant le procédé de l'invention, présenté sur le schéma synoptique de la figure 2, il est créé un ensemble de relations entre des sources d'informations en fonction d'opérations réalisées par les opérateurs sur les contenants d'informations.

**Suivant le procédé, dans une première étape,** un système de traitement numérique 101 est initialisé 210 par la création d'une base de données de contenants et de sources d'informations 110, ledit système de traitement numérique étant adapté pour pouvoir à la demande d'un opérateur, ou par un appel d'un logiciel ou d'un composant logiciel, afficher le contenu de chacun des différents contenants d'informations de ladite base de données de contenants et de sources d'informations.

Ainsi lors d'une séance de travail pendant laquelle il est prévu de pouvoir consulter les informations, l'ensemble des contenants d'informations est accessible et chacun des opérateurs participant à la séance de travail peut afficher un contenu par l'intermédiaire du système de traitement numérique 101.

Il est noté à ce stade du procédé que les opérateurs peuvent être regroupés autour de moyens d'affichage 120 du système de traitement numérique, moyens d'affichage qui sont alors partagés, ou que les opérateurs, ou certains d'entre eux, peuvent être distants du système de traitement numérique 101 en disposant de moyens d'affichage 120' dédiés, par exemple d'un ordinateur 121, et connectés fonctionnellement au système de traitement numérique, par exemple via un réseau privé ou via un réseau public.

**Dans une deuxième étape** du procédé, des données d'actions représentatives des opérations 131 effectuées par le ou les opérateurs lors de manipulations sur les contenants d'informations et / ou sur leurs contenus sont détectées et identifiées 220 par le système de traitement numérique 101 et enregistrées 221 dans un registre des opérations 130.

Les manipulations sur les contenants d'informations peuvent être réalisées par tout moyen d'interface 140, existant ou à venir, pour interagir avec le système de traitement numérique. De tels moyens d'interface sont, de manière connue dans le domaine informatique, par exemple des claviers de commande, des systèmes de pointage tel que souris ou boules de pointage, des dispositifs de commande vocale, et, dans une forme avantageuse, des détecteurs, associés aux moyens d'affichage 120, de la position des doigts des opérateurs sur des écrans des dits moyens d'affichage.

Comme il a été précisé précédemment les opérations 131 sur les contenants d'informations pour lesquelles les données d'actions sont enregistrées dans le registre des opérations 130 ne s'adressent pas, pour les besoins de la mise en œuvre du procédé, aux informations sur le fond mais seulement à des typologies des actions par lesquelles sont réalisées les opérations.

Dans un mode de mise en œuvre du procédé, les opérations 131 sont enregistrées 221 suivant une nomenclature 150 d'opérations prédéfinies 151 dans le système de traitement numérique 101.

Avantageusement chaque opération 131 est datée de sorte qu'une chronologie des opérations puisse être reconstituée.

Chaque opération prédéfinie 151 de la nomenclature 150 est autant que de besoin associée à des arguments, représentés de manière symbolique entre parenthèses, pour identifier par exemple les acteurs et les objets d'une opération prédéfinie 151 considérée.

A titre d'illustration, le tableau suivant présente un exemple d'une séquence de manipulations réalisées sur des contenants d'informations 111 par des opérateurs au cours d'une séance de travail.

| opérateur | contenant d'informations | opérations réalisées | opération enregistrée |
|---|---|---|---|
| ... | | | |
| op01 | D01 | sélection dans la base et affichage d'un **contenant** dans lequel est affiché le document D01 | OUVERTURE (D01), (op01), *(date)* |
| op01 | D01 | sélection dans le **contenant** d'une zone du document affiché | SELECTION (D01), (op01), *(date)* |
| op01 | D01 | duplication de l'affichage du **contenant** vers op02 et op03 grâce à la création de nouveaux contenants | PARTAGE (D01) (op01, op02), *(date)* |
| op02 | D01 | annotation sur l'affichage du **contenant** D01 | ANNOTATION (D01), (op02), *(date)* |
| op02 | D11 | enregistrement des notes apportées à D01 dans nouveau **contenant** d'informations de la base | ENREGISTREMENT (D11), (D01), (op02), *(date)* |
| op03 | - D02 | sélection et affichage du document D02 par l'affichage d'un nouveau **contenant** | OUVERTURE (D02), (op03), *(date)* |
| op03 | D02 | juxtaposition de **contenants** par l'affichage de D02 à l'affichage de D01 | RAPPROCHEMENT (D01, D02), (op03), *(date)* |
| ... | | | |

Dans ce tableau op01, op02 et op03 représentent trois opérateurs indépendants, par exemple trois personnes travaillant collaborativement sur un ensemble de contenants d'informations dans le cadre d'un projet commun, qui sont ici identifiés de manière anonyme mais qui peuvent, dans un mode de réalisation, être connus par des identifiants lorsque chaque opérateur se connecte au système.

Dans certaines situations, par exemple dans le cas d'un travail collaboratif autour d'un écran tactile unique sans moyen d'identification d'un opérateur agissant sur l'écran, l'argument "opérateur" n'est pas enregistré dans le registre d'opérations.

D01, D02... correspondent à des contenants d'informations 111 en général.

Les opérations "SELECTION", "OUVERTURE", "PARTAGE" ...sont des exemples, présentés sous forme littérale, des opérations sous lesquelles le système de traitement numérique 101 classe les actions correspondant à des opérations réalisées par les opérateurs sur les contenants d'informations. Ces désignations présentées pour l'exemple sont arbitraires. Toute forme explicite ou symbolique pour désigner les opérations peut être utilisée.

Dans ce tableau, le premier argument Dxx détermine le ou les contenants d'informations auxquels est appliquée une opération considérée et un deuxième argument Dyy détermine le cas échéant un contenant d'informations dont est issu un nouveau contenant d'information.

D'autres opérations 131 non illustrées dans le tableau précédent sont susceptibles d'être inscrites dans le registre d'opérations 130. Par exemple des opérations de recopies d'un contenant d'informations, des opérations de sélections de parties du contenu d'un contenant, des opérations d'extractions/copies de parties d'un contenu, des opérations de fermetures de contenant, des opérations de "repliements" ou "déploiements" d'un contenant affiché, des opérations de changements de dimensions ou d'orientations d'un contenant, des opérations de manipulations d'objets en trois dimensions, des durées pendant lesquelles des contenants sont affichés, des durées entre deux interactions avec un contenant affiché, des adressages directs par l'activation d'hyperliens dans un même document ou vers d'autres documents ...

L'identification d'une opération parmi la nomenclature 150 des opérations prédéfinies 151 par le système de traitement numérique 101 est de préférence réalisée automatiquement par ledit système de traitement numérique. Cette identification est effectuée pendant la période où l'opération sur un contenant d'informations est réalisée suivant des procédés conventionnels pour caractériser des événements correspondant à des commandes normalement interprétées par les systèmes d'exploitation des dispositifs informatiques.

Dans une forme de réalisation, les moyens d'interface 140 comportent des moyens de sélection d'opérations 141 qui sont à la disposition des opérateurs pour leur permettre de qualifier eux-mêmes une opération qui doit être enregistrée.

D'une manière générale, comme il sera compris de la suite de la description de l'exemple de mise en œuvre du procédé 200 de l'invention, tous les types d'opérations considérées comme pouvant traduire un intérêt, absolu ou relatif, ou un désintérêt, pour des opérateurs vis à vis d'une information seront avantageusement introduits dans la nomenclature 150 des opérations prédéfinies 151 devant être enregistrées, pour autant qu'un algorithme de détection de ces opérations sur la base des interactions entre les opérateurs et le système de traitement numérique 101 soit implémenté et ou que des moyens soient mis à la disposition des opérateurs pour définir à quelle interaction prédéfinie 151 une opération donnée doit être identifiée.

Dans une forme de mise en œuvre, la nomenclature 150 des opérations prédéfinies comporte toute ou partie des opérations suivantes :
- Création d'un **contenant** d'informations suite à l'envoi d'une information numérique vers le dispositif ou d'une référence vers une source d'information,
- Sélection d'un **contenant** d'informations pour affichage visuel de son contenu, par exemple dans un nouveau contenant plus approprié ;
- Manipulation de la représentation visuelle d'un **contenant** d'informations (e.g. déplacement horizontal, agrandissement ou rétrécissement, rotation éventuelle...) ;
- Manipulation de la représentation visuelle d'un contenu d'un **contenant** d'informations (e.g. manipulation d'une information 3D, avancement dans un fichier texte, agrandissement d'une image, sélection d'un lien hypertexte...),
- Duplication d'un **contenant** d'informations pour en offrir un affichage alternatif, qui peut être dépendant ou indépendant ;
- Enrichissement d'un **contenant** d'informations (e.g. annotation intra ou inter contenant(s) d'informations, tampons apposés à un contenant d'informations) ;
- Fermeture de la représentation visuelle d'un **contenant** d'informations ;
- Edition du contenu d'un **contenant** d'informations (e.g. ajout de texte, correction de texte, surlignage, édition des cases d'un tableur...) ;
- Création manuelle de liens entre **contenants** d'informations ;
- Envoi d'un **contenant** d'informations sur une autre surface d'affichage, locale ou distante ;

Dans une forme préférée, la nomenclature 150 comporte au moins l'ensemble des opérations sur des contenants d'informations de la liste précédente, des possibilités étant offertes à un opérateur de limiter l'exploitation du registre des opérations 130 comme il sera expliqué dans les étapes suivantes du procédé.

Les arguments tels que présentés dans l'exemple ci-dessus ne sont pas limités aux opérateurs et aux contenants d'informations. Ainsi les arguments peuvent être des valeurs booléennes indiquant un statut particulier dans une séquence, par exemple un contenant d'informations affiché et refermé sans avoir été sujet à une autre interaction. Ainsi les arguments peuvent être des variables telles que des valeurs numériques représentatives d'informations d'affichage, par exemple une dimension d'affichage (par exemple exprimé en % de la surface d'affichage disponible) consacré à la présentation d'une information.

Dans une forme de mise en œuvre, chaque opération sur les contenants d'informations est datée de sorte qu'une chronologie des opérations puisse être traitée pour créer des liens d'intérêt croisés entre des informations de différents contenants d'informations, sans que, dans le cadre de ce traitement, il soit fait usage des données et du contenu en général des contenants d'informations.

Comme illustré dans le tableau ci-dessus, la base de données de contenants et de sources d'informations 110 est enrichie 222 lorsque les opérateurs accèdent et ou modifient des contenants d'informations et/ou des contenus qui leurs sont associés.

Un contenu et ou le contenant d'informations associé peut être accédé par sélection d'un contenant initial pour affichage, pour manipulation du contenant d'informations pour en modifier ses proportions, pour déplacement du contenant d'informations...

Un contenu peut être modifié par la superposition d'une information, une sélection d'une information, des annotations, l'apposition de balises ou de tampons numériques ...

Une source d'information 115 peut être créée à partir des contenants informations 111 affichés, par exemple par capture de tout ou partie de la zone d'affichage.

Une source d'information peut être ajoutée à la base de données 110 par un ou plusieurs opérateurs au moyen de leurs dispositifs personnels et ou d'éléments d'interface.

Lorsque la base de contenants et de sources d'informations 110 est ainsi enrichie, soit sur décision d'un opérateur, soit de manière automatique par le système de traitement numérique, par exemple sur la base d'un test de modifications d'une information ou de modifications d'un contenant d'informations, les nouveaux contenants d'informations deviennent manipulables par les opérateurs suivant les mêmes règles que les autres contenants d'informations préexistants.

A contrario, des opérations considérées comme non représentatives d'un intérêt particulier d'un opérateur vis à vis d'un contenant d'informations telles que des opérations de préparation, par exemple une mise à jour de la base de contenants d'informations ou des recopies de contenants d'informations sur d'autres supports ou dans des répertoires de sauvegarde, peuvent ne pas être enregistrées en tant que telles dans le registre d'opérations.

**Dans une troisième étape du procédé,** les opérations enregistrées dans le registre des opérations sont traitées 230 par une unité de traitement des opérations 163 du système de traitement numérique 101 pour déterminer des interactions entre les différents contenants d'informations 111 et les différentes sources d'informations 115 associées.

Bien que décrit ici dans le contexte d'un traitement a posteriori d'un registre des opérations 130 résultant d'une séance de travail, le traitement des opérations enregistrées 131 peut être réalisé de manière récurrente à intervalles de temps ou de nombre d'opérations plus ou moins grand, voire après chaque nouvelle opération introduite dans le registre des opérations dans le contexte d'une exploitation en "temps réel".

Les interactions entre les contenants d'informations 111 définissent un ensemble de liens relationnels 231 entre les sources d'informations.

Chaque lien relationnel 231 est le résultat d'un traitement logique des opérations enregistrées 131 dans le registre des opérations 130 destiné à identifier et à qualifier les interactions pouvant exister entre une source d'informations 115 avec au moins une autre des sources d'informations de la base de contenants et de sources d'informations.

Dans une forme particulière, un lien relationnel 231, pouvant être représenté par exemple par une boucle sur une source d'informations, traduit une opération n'impliquant pas d'autre contenant d'information. Une telle situation se trouve par exemple lorsqu'une opération concerne par exemple un temps d'affichage ou une dimension d'affichage.

La détermination d'un lien relationnel est établie par l'unité de traitement des opérations 163 par la recherche d'une combinaison d'un ensemble de critères.

Au moins un lien relationnel 231 entre deux sources d'informations 115 est créé automatiquement dès lors que au moins un critère de relation est satisfait. Chaque type de relations possède un ensemble de critères qui lui est propre, au moins suffisamment caractéristique pour que la relation soit déterminée sans ambiguïté et différenciée des autres relations.

Suivant une forme de mise en œuvre du procédé, au moins une relation caractérisant un lien relationnel est recherchée par l'unité de traitement des opérations 163 parmi toute ou partie des relations suivantes :
- une relation **"antériorité"** qui est créée entre deux sources d'informations lorsque le nom de la source d'information est identique mais que les contenus affichés dans les deux contenants d'informations correspondants a évolué entre un premier et un second affichage.
- une relation **"séquentiel"** qui est créée entre deux sources d'informations dont les deux contenants d'informations correspondants ont été sujets à des interactions d'au moins un utilisateur avec ledit contenant d'informations de façons consécutives.
- une relation **"parallèle"** qui est créée entre les sources d'informations dont les contenants d'informations correspondants subissent des interactions d'au moins un utilisateur de façons simultanées.
- une relation **"spatiale"** qui est créée entre les sources d'informations dont les contenants d'informations correspondants sont volontairement rapprochés par au moins un utilisateur.
- une relation **"usage"** qui est créée entre deux sources d'informations dont une majeure partie des temps d'affichage de contenants d'informations associés s'est produite sur une même période.
- une relation **"superposition"** qui est créée entre des sources d'informations lorsque des contenants d'informations correspondant à ces sources auront été superposées les unes aux autres et associées à des paramètres de transparence permettant de percevoir les informations de couches inférieures à travers des couches supérieures se superposant aux couches inférieures.
- une relation **"annotation"** qui est créée entre deux sources d'informations lorsque une annotation manuelle aura été réalisée par au moins un utilisateur entre des contenants d'informations associés auxdites sources. Les éléments d'annotation commencent ainsi dans un contenant de l'une de ces informations et se terminent dans un contenant de l'autre information, et de ce fait appartiennent aux deux informations.
- une relation **"capture"** qui est créée entre des sources d'informations dont des informations sont toutes incluses dans une unique capture d'écran réalisée par un opérateur sur des contenants d'informations correspondant à ces sources.
- une relation **"hiérarchique"** qui est créée entre deux sources d'informations dont l'une est le résultat d'une extraction d'un contenant d'informations extrait de l'autre contenant d'information correspondant à la source initiale, au moyen par exemple d'une fonction de capture d'écran locale.
- une relation **"ensembliste"** qui est créée entre chacune des sources d'informations dont les contenants d'informations correspondant à ces sources auront été identifiés manuellement par les utilisateurs au moyen d'un élément de l'interface du dispositif. Un tel élément d'interface peut par exemple être un tampon virtuel apposé par le ou les utilisateurs sur les informations à intégrer dans une telle relation.
- une relation **"informationnel"** qui est créée entre deux sources d'informations dont l'une est de type fichier texte/annotation, et dont le contenant aura été associé au contenant la première. Une telle relation peut par exemple être définie par une commande dédiée d'une interface de gestion.
- une relation **"interaction"** qui est créée entre les différentes sources d'informations entre lesquels les interactions sur des contenants d'informations correspondant à ces sources sont partagées grâce à une fonction associée dans l'interface, ce dans l'objectif de synchroniser les manipulations qui sont réalisées sur une vignette représentative de l'un des contenants d'informations avec des manipulations équivalentes sur d'autres vignettes représentatives des autres contenants d'informations.
- une relation **"conditionnel"** qui est créée entre deux sources d'informations qui correspond à deux hypothèses différentes ouvrant une alternative. Une telle relation peut par exemple être définie par une commande dédiée d'une interface de gestion.

Dans une forme de mise en œuvre du procédé, une relation « vide » est créée sur une source d'informations unique pour laquelle il n'est établi aucun lien relationnel avec une autre source d'informations distincte.

Dans une forme de mise en œuvre du procédé, un lien relationnel est affecté d'un poids traduisant une importance particulière du lien, importance établie en fonction de séquences, de répétitions ou autres actions qui par combinaison renforce l'attention sur un lien particulier.

Dans un mode de mise en œuvre du dispositif l'ensemble des relations exprimées ci-dessus sont recherchées par des traitements du contenu du registre des opérations 130 par l'unité de traitement des opérations 163.

Dans un mode mise en œuvre du procédé 200, seule une partie des relations exprimées ci-dessus sont recherchées par le traitement du registre des opérations 130 par l'unité de traitement des opérations 163.

En outre, il doit être considéré que des relations qui ne sont pas identifiées dans la liste des relations présentées ci-dessus peuvent être considérées pour autant que ces autres relations peuvent être caractérisées comme des liens relationnels, pouvant être établis par un traitement des opérations enregistrées 131 dans le registre des opérations 130.

**Dans une quatrième étape du procédé,** les liens relationnels établis lors de la troisième étape sont interprétés pour être exploités par un opérateur.

Dans un mode de réalisation, les liens relations sont représentés 240 pour être interprétables par un opérateur.

Par exemple les liens relationnels sont représentés sous la forme de graphes 241 représentant tout ou partie des liens relationnels 231.

Par exemple dans un tel graphe, chaque contenant d'informations est représenté par un nœud du graphe, et chaque relation existant entre deux contenants d'informations, correspondant à un lien relationnel, est une arête du graphe.

Il est connu de réaliser de tels graphes qui peuvent produire une représentation 2D ou 3D d'un ensemble de données et dans laquelle le ou les utilisateurs peuvent naviguer.

Avantageusement, la représentation matérialisée à un instant donné peut n'être que partielle par exemple en ne matérialisant que certains types de relations, et donc d'arêtes dans la représentation graphique, ou qu'un nombre limité de contenants d'informations, et donc de nœuds dans la représentation graphique, ou encore que les interactions correspondant à un créneau de temps choisi.

Ces différentes possibilités sont par exemple mises en œuvre au moyen de filtres logiques paramétrés et ou activés par un utilisateur.

Dans une forme de mise en œuvre, les nœuds sont interactifs de sorte qu'un utilisateur peut accéder par des liens logiques aux opérations réalisées sur la source d'informations correspondant à un nœud donné, opérations enregistrées dans le registre des opérations 130, et ou peut accéder au contenu de la source d'informations correspondant à un nœud donné, stocké dans la base de contenu d'informations 110.

Dans une forme de mise en œuvre du procédé, la visualisation des liens relationnels est déclenchée par une commande d'un opérateur, par exemple par action sur un bouton logique ou sur un bouton physique dédié, ou par une commande vocale ou toute autre action détectable par le système 101.

Avantageusement une visualisation peut être déclenchée à tout moment pendant la mise en œuvre du procédé lorsque le registre des opérations 130 contient une pluralité d'opérations 131 enregistrées.

La génération de graphe est connue et par exemple peut être réalisée par des logiciels tel que le logiciel libre GEPHI ou le logiciel TULIP développé par le laboratoire LaBRI (Laboratoire Bordelais de Recherche en Informatique).

La mise en œuvre du procédé 200 est terminée 250 avec la fin d'une séance de travail.

Avantageusement, les données correspondant à une séance de travail sont archivées par le système 101, en particulier la base de contenants et de sources d'informations 110 et le registre des opérations 130 de sorte à assurer une traçabilité du travail réalisé et le cas échéant pour réinitialiser le système 101 et reprendre une séance de travail interrompue.

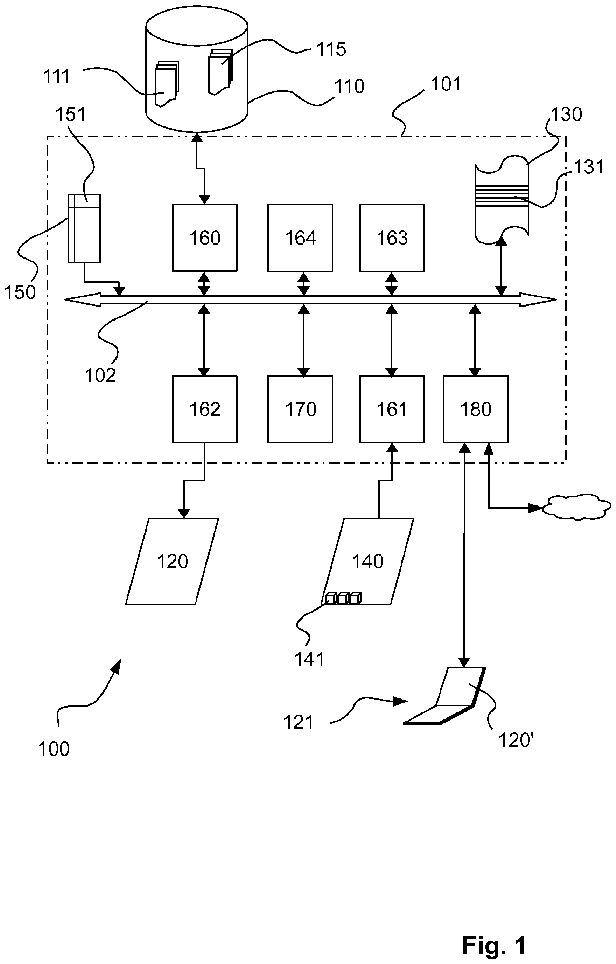

La figure 1 représente un exemple d'un dispositif 100 de mise en relation de contenants de données adapté à la mise en œuvre du procédé de l'invention.

Le dispositif 100 est un outil d'aide à la réflexion destiné à la mise en œuvre du procédé 200 de l'invention.

Le dispositif 100 comporte un système de traitement numérique 101, des moyens de mémorisation de données, des moyens d'affichage 120 et des moyens d'interface 140 pour agir sur le fonctionnement du système de traitement numérique.

Le système de traitement numérique comporte :
- au moins une unité d'administration 160 d'une base de contenants et de sources d'informations 110, ladite unité d'administration étant configurée pour gérer le contenu de ladite base de contenants et de sources d'informations, en particulier le chargement, les mises à jour de la base de contenants et de sources d'informations et les accès aux contenants 111 et aux sources d'informations 115 ;
- au moins une unité d'interprétation 161 des interactions d'un ou de plusieurs opérateurs avec les moyens d'interface 140 pour identifier l'exécution d'opérations sur les contenants d'informations 111, les dites opérations étant identifiées dans une nomenclature 150 d'opérations prédéfinies mémorisées dans une mémoire du dispositif 100, et pour identifier des arguments de chaque opération et pour mémoriser dans un registre d'opérations 130 un historique des opérations réalisées et de leurs arguments ;
- au moins une unité de gestion d'affichage 162 réalisant, outre les fonctions conventionnelles d'affichage des contenus des contenants d'informations 111, les affichages nécessaires à la gestion des actions réalisées sur les contenants d'informations, en particulier des boutons virtuels de sélection et de validation des opérations, au moins lorsque l'identification d'opérations nécessite une interaction d'un opérateur ;
- au moins une unité de traitement des opérations 163 pour identifier des liens relationnels entre des contenants d'informations en fonction des actions mémorisées dans le registre des opérations 130 ;
- au moins une unité de synthèse 164 et de représentations des liens relationnels et d'interprétation des interactions d'au moins un utilisateur pour paramétrer les représentations et pour mener une exploration des représentations.

Dans une forme de réalisation, le dispositif 100 comporte au moins une unité d'action 170 sur les contenants d'informations de sorte à réaliser en fonction d'ordres reçus par des commandes des opérateurs et ou par des instructions du dispositif la lecture, l'affichage, la modification et l'enregistrement de chaque type de contenant d'informations.

Une telle unité d'action 170 correspond à des moyens de traitement ordinaires d'un système informatique disposant des programmes nécessaires pour chaque type de contenant d'informations et, suivant la source d'informations, des logiciels du type traitement de texte, du type tableur, du type traitement des images et des vidéos, du type CAO ....

Dans une forme de réalisation, l'unité d'action 170 correspond à une ressource extérieure échangeant les informations numériques nécessaires au fonctionnement du dispositif via un réseau tel qu'un réseau Ethernet.

Comme l'illustre à titre d'exemple la figure 1, le dispositif présente par exemple une architecture de calculateur numérique comportant un ou plusieurs processeurs dans lequel les unités fonctionnelles, et les diverses mémoires nécessaires, sont agencées autour d'un ou plusieurs bus de communication numérique et qui est connecté fonctionnellement, pour le moins, aux moyens d'affichage 120 et aux moyens d'interface 140.

Les moyens d'affichage 120 sont architecturés autour d'au moins un dispositif de visualisation ayant les capacités d'afficher les différents types d'informations des contenants d'informations susceptibles d'être entrés dans la base de contenants et de sources d'informations 110. Avantageusement les moyens d'affichage 120 disposent également de capacité à traiter des sources d'informations audio pour reproduire les sons, associés ou non à d'autres types de fichiers, par exemple des sources d'informations caractérisant des sensations musculaires au travers de systèmes de restitution d'efforts.

Dans une forme de réalisation avantageuse, au moins un dispositif de visualisation est un écran de visualisation de dimensions et de résolution suffisante pour afficher une pluralité de contenus avec une qualité suffisante pour en permettre une lecture ou une analyse par plusieurs opérateurs simultanément et permettre à ces mêmes opérateurs d'interagir, autant que possible simultanément, sur les contenus ou sur les contenants d'informations visualisés.

Les moyens d'interface 140 consistent en tout moyen et ou toutes combinaisons de moyens connus pour la saisie de données et pour la manipulation de fichiers numériques et ou de leurs contenus. Dans une forme avantageuse de réalisation, les moyens d'interface 140 sont intégrés à au moins un dispositif de visualisation des moyens d'affichage, par exemple sous la forme d'un écran tactile.

Un tel écran tactile peut être placé dans un plan sensiblement à l'horizontale, pour favoriser la collaboration entre les utilisateurs, dans un plan sensiblement à la verticale, pour favoriser la lecture et le partage de l'information, ou à quelle qu'autre orientation susceptible de favoriser des cas d'usage spécifiques.

Avec une telle architecture d'interface, le ou les opérateurs peuvent directement interagir avec les informations numériques affichées en posant directement leurs doigts sur les contenants de ces informations affichés, par exemple pour manipuler lesdites informations numériques affichées (interaction active) ou pour attirer l'attention des autres opérateurs sur certaines parties d'une information numérique donnée ou sur des relations existant entre plusieurs de ces informations numériques (interaction passive).

Avantageusement, des gestes réalisés par un opérateur sur la surface tactile d'un écran à seule fin d'attirer l'attention des autres participants seront enregistrés par le dispositif 100 sous la forme d'actions 131, enregistrées dans le registre des opérations 130, aux fins d'être prises en compte dans une analyse réalisée par l'unité de traitement des opérations, et ce même si une fonction logicielle a été utilisée pour bloquer l'interprétation des événements tactiles.

Dans une forme alternative de réalisation, les moyens d'affichage 120 comportent deux ou plus écrans tactiles de sorte que différents opérateurs ou différents groupes d'opérateurs disposent chacun de la possibilité de visualiser et d'interagir avec les informations numériques affichées tout en continuant à partager les actions du fait d'un affichage commun aux écrans.

Dans une forme alternative de réalisation, des terminaux informatiques affectés en tout ou partie à un ou des opérateurs sont raccordés via un réseau numérique au dispositif 100 de sorte à échanger et ou à transmettre, en début ou en cours d'une session de travail, des sources d'informations et ou des contenants d'informations à la base de données de contenants et de sources d'informations.

Dans une forme alternative de réalisation, au moins deux écrans tactiles sont intégrés au dispositif, dont au moins un écran tactile horizontal affecté à des échanges interactifs avec les différents opérateurs et dont au moins un écran tactile vertical affecté à la visualisation d'informations critiques.

Dans un mode de réalisation, le dispositif 100 comporte des moyens de connexion à un réseau de communication par une unité de communication 180 réalisant une synchronisation de deux ou plus dispositifs conformes au dispositif de l'invention.

Dans une forme de réalisation, plusieurs dispositifs 100 sont raccordés via un réseau numérique de sorte à échanger et ou transmettre, en début ou en cours d'une session de travail, des sources d'informations 115 et ou contenants d'informations 111 entre les bases de données 110. Avantageusement, selon les réglages réciproques des dispositifs, les informations d'exploitation de leurs bases de données 110 respectives peuvent ou non être synchronisées.

L'unité de communication 180 réalise la synchronisation de deux dispositifs 100, pouvant être situés dans des lieux distants, en assurant :
- une initialisation similaire sinon identique de chacun des dispositifs ;
- la recopie en temps réel des bases de données de contenants et de sources d'informations 110, lors de l'initialisation et également en fonction des modifications apportées aux dites bases lors des séances de travail ;
- la recopie en temps réel des modifications apportées aux registres des opérations 130 ;
- la transmission en temps réel de données permettant à chacun des dispositifs de reconstruire tout ou partie des affichages et de leurs modifications sur les moyens d'affichage 120.

Par temps réel, il doit ici être compris que les recopies de tout ou partie des affichages et ou interactions d'un dispositif par un autre sont réalisées sans autres latences que celles imposées par les capacités des moyens de communication qui de préférence sont dimensionnés et utilisent des protocoles de communication permettant aux opérateurs distants de travailler de manière quasi-simultanée de sorte que les différents dispositifs fonctionnent en miroir.

Le dispositif de l'invention permet à un ou plusieurs utilisateurs, à tout instant d'une séance de travail pour laquelle il aura utilisé les moyens de mise à jour de la base de données de contenants et de sources d'informations et les moyens d'interaction mis à sa disposition, de restituer objectivement à sa demande via au moins une interface de visualisation des ensembles de relations liant ces informations sur la manière dont les contenants d'informations ont été utilisés, ce qui aura été déterminé en fonction des interactions préalablement réalisées sur des sous-ensembles des informations numériques.

## Revendications

1. Procédé (200) de mise en relation de sources d'informations, lesdites sources d'informations (115) étant référencées dans une base de contenants et de sources d'informations (110), dans lequel des contenants d'informations (111) générés à partir des dites sources d'informations sont manipulés, par un ou plusieurs opérateurs au cours d'une session, en mettant en œuvre un dispositif (100) permettant aux opérateurs de réaliser des opérations sur les contenants d'informations, un contenant d'informations correspondant à une forme de présentation unitaire d'informations, à l'usage d'un opérateur, offrant une représentation visuelle d'une information numérique, ledit procédé étant **caractérisé en ce que** :
- toute opération (131) réalisée par un opérateur sur un contenant d'informations (111), et appartenant à un type d'opérations (151) sur les contenants d'informations identifié dans une nomenclature d'opérations prédéfinies (150), est enregistrée par le dispositif (100) dans un registre des opérations (130) sur les contenants d'informations d'un système de traitement numérique (101) dudit dispositif ;
et **en ce que** :
- un traitement du registre des opérations (130) par le système de traitement numérique (101) détermine des liens relationnels (231) entre les sources d'informations (115).

2. Procédé suivant la revendication 1 comportant une étape préalable d'initialisation de la base de contenants et de sources d'informations (110).

3. Procédé suivant la revendication 1 ou la revendication 2 dans lequel la nomenclature d'opérations prédéfinies (150) sur les contenants d'informations comporte tout ou partie des opérations de :
- Création d'un contenant d'informations suite à l'envoi d'une information numérique vers le dispositif ou d'une référence vers une source d'information ;
- Sélection d'un contenant d'informations pour affichage visuel de son contenu ;
- Manipulation de la représentation visuelle d'un contenant d'informations ;
- Manipulation de la représentation visuelle d'un contenu d'un contenant d'informations ;
- Duplication d'un contenant d'informations ;
- Enrichissement d'un contenant d'informations ;
- Fermeture de la représentation visuelle d'un contenant d'informations ;
- Edition du contenu d'un contenant d'informations ;
- Création manuelle de liens entre contenants d'informations ;
- Envoi d'un contenant d'informations sur une autre surface d'affichage, locale ou distante ;

4. Procédé suivant l'une des revendications précédentes dans lequel au moins une opération (131) sur les contenants d'informations enregistrée dans le registre des opérations (130) comporte au moins un argument de structure définie dans la nomenclature d'opération (150), des valeurs de l'au moins un argument étant déterminées par le système de traitement numérique (101) en fonctions de conditions de réalisation de ladite au moins une opération sur les contenants d'informations observable par ledit système de traitement numérique.

5. Procédé suivant l'une des revendications précédentes dans lequel tout ou partie des liens relationnels (231) résultant du traitement du registre des opérations (130) est une relation entre au moins deux sources d'informations (115) de type :
- **"antériorité"** lorsque les noms de deux sources d'informations sont identiques mais que les contenus affichés dans les deux contenants d'informations ont évolué entre un premier et un second affichage ;
- **"séquentiel"** entre deux sources d'informations dont les deux contenants d'informations ont été sujets à des interactions d'au moins un utilisateur avec ledit contenant d'informations de façons consécutives ;
- **"parallèle"** entre les sources d'informations dont les contenants d'informations subissent des interactions d'au moins un utilisateur de façons simultanées ;
- **"spatiale"** entre les sources d'informations dont les contenants d'informations sont volontairement rapprochés par au moins un utilisateur ;
- **"usage"** entre deux sources d'informations dont une majeure partie des temps d'affichage de contenants d'informations associés s'est produite sur une même période d'une durée prédéfinie ;
- **"superposition"** entre des sources d'informations lorsque des contenants d'informations correspondant à ces sources ont été superposées les unes aux autres et associées à des paramètres de transparence permettant de percevoir les informations de couches inférieures à travers des couches supérieures superposées aux couches inférieures ;
- **"annotation"** entre deux sources d'informations lorsqu'une annotation manuelle a été réalisée par au moins un utilisateur entre des contenants d'informations associés auxdites sources ;
- **"capture"** entre des sources d'informations dont des informations sont toutes incluses dans une unique capture d'écran réalisée par un opérateur sur des contenants d'informations correspondant à ces sources ;
- **"hiérarchique"** entre deux sources d'informations dont l'une est le résultat d'une extraction d'un contenant d'informations extrait de l'autre contenant d'information correspondant à la source initiale ;
- **"ensembliste"** entre chacune des sources d'informations dont les contenants d'informations correspondant à ces sources auront été identifiés manuellement par les utilisateurs au moyen d'un élément de l'interface du dispositif ;
- **"informationnel"** entre deux sources d'informations dont l'une est de type fichier texte/annotation, et qui aura été associée à l'autre ;
- **"interaction"** entre les différentes sources d'informations entre lesquels les interactions sur des contenants d'informations correspondant à ces sources sont partagées grâce à une fonction associée dans l'interface ;
- **"conditionnel"** entre deux sources d'informations, dont des contenants d'informations correspondent aux dites sources, correspondent à deux hypothèses différentes ouvrant une alternative.

6. Procédé suivant l'une des revendications précédentes dans lequel une relation **"vide"** est associée à toute source d'informations (115) de la base de contenants et de sources d'informations (110) n'ayant pas été manipulé au cours d'une session.

7. Procédé suivant l'une des revendications précédentes dans lequel le traitement du registre des opérations (130) par le système de traitement numérique (101) pour déterminer des liens relationnels (231) entre les sources d'informations (115) est réalisé automatiquement par le système de traitement numérique (101) au cours d'une même session après chaque enregistrement d'une opération (131) sur un ou des contenants d'informations dans le registre des opérations (130), ou de manière récurrente pendant une session à des intervalles de temps ou de nombre d'enregistrements d'opérations définis.

8. Procédé suivant l'une des revendications précédentes dans lequel les liens relationnels sont traités par le système de traitement numérique (101) ou par un système de traitement numérique annexe du dispositif (100) pour construire une représentation visuelle de tout ou partie des relations, ladite représentation visuelle pouvant être affichée de manière interactive sur un système de visualisation.

9. Dispositif (100) de mise en relation d'un ensemble d'informations comportant un système de traitement numérique (101), une base de contenants et de sources d'informations (110), des moyens d'affichage (120) et des moyens d'interface (140), pour permettre à un opérateur d'agir sur le fonctionnement du dispositif, interconnectés fonctionnellement, ledit système de traitement numérique comportant un ou plusieurs processeurs, comportant des mémoires de données et des mémoires de programmes, et comportant des moyens de connexion à la base de contenants d'informations (110), aux moyens d'affichage (120) et aux moyens d'interface (140), lesdits processeurs, mémoires et moyens de connexion étant connectés à un ou des bus de communications internes (102) pour échanger des instructions et ou des données, le système de traitement numérique (101) étant architecturé et comportant des mémoires d'instructions de programmes pour constituer fonctionnellement :
- au moins une unité d'administration (160) connectée à la base de contenants et de sources d'informations (110) et en charge de la gestion des contenants d'informations de ladite base ;
- au moins une unité de gestion d'affichages (162) connectée aux moyens d'affichage (120) pour afficher des contenus de contenants d'informations (111) et les résultats d'actions d'opérateurs sur les dits contenus ou contenants d'informations, un contenant d'informations correspondant à une forme de présentation unitaire d'informations, à l'usage d'un opérateur, offrant une représentation visuelle d'une information numérique ;
- au moins une unité d'interprétation des interactions (161) connectée aux moyens d'interface (140) pour interpréter les actions réalisées par des opérateurs sur lesdits moyens d'interface ;
**caractérisé en ce que** le système de traitement numérique (101) comporte également :
- au moins une unité de traitement des opérations (163) organisée pour analyser les actions réalisées par des opérateurs sur lesdits moyens d'interface, identifier parmi lesdites actions celles qui correspondent à une opération prédéfinie (151) sur les contenants d'informations répertoriée dans une nomenclature (150) d'opérations sur les contenants d'informations prédéfinies, et enregistrer chaque opération (131) sur les contenants d'informations identifiée dans un registre des opérations (130) ;
- au moins une unité de synthèse (164) réalisant une interprétation des opérations sur les contenants d'informations et de leurs enchaînements pour identifier des liens relationnels (231) entre des sources d'informations (115).

10. Dispositif suivant la revendication 9 dans lequel le système de traitement numérique (101) comporte au moins une unité d'action (170) ou est connecté fonctionnellement à une unité d'action externe, ladite au moins une unité d'action étant organisée sur les plans matériels et logiciels pour agir sur les contenus des contenants d'informations (111) et en particulier pour afficher et ou modifier lesdits contenus.

11. Dispositif suivant l'une des revendications 9 ou 10 dans lequel le système de traitement numérique
(101) comporte au moins une unité de communication (180) configurée pour permettre la connexion d'un ordinateur (121) en tant que terminal d'affichage du dispositif (100) et ou en tant que moyen d'interface du dispositif (100).

12. Dispositif suivant l'une des revendications 9 à 11 dans lequel le système de traitement numérique
(101) comporte au moins une unité de communication (180) configurée pour permettre la connexion d'au moins un dispositif distant conforme au dispositif (100) de sorte que les au moins deux dispositifs fonctionnent en mode miroir.

## Patentansprüche

1. Verfahren (200) zum Verbinden von Informationselementquellen, wobei die Informationselementquellen (115) in einer Behältnis- und Informationselementquellenbank (110) gelistet sind, wobei auf der Basis der Informationselementquellen erzeugte Informationselementbehältnisse (111) von einem oder mehreren Bedienern während einer Sitzung bedient werden, indem eine Vorrichtung (100) zum Einsatz kommt, die es den Bedienern gestattet, Operationen auf den Informationselementbehältnissen durchzuführen, wobei ein Informationselementbehältnis einer unitären Informationselementpräsentation für einen Bediener entspricht, die eine visuelle Darstellung eines numerischen Informationselements bietet, wobei das Verfahren **dadurch gekennzeichnet ist, dass**:
- jede Operation (131), die von einem Bediener auf einem Informationselementbehältnis (111) durchgeführt wird und zu einem in einer Nomenklatur vorher festgelegter Operationen (150) identifizierten Typ von Operationen (151) auf den Informationselementbehältnissen gehört, von der Vorrichtung (100) in einem Register der Operationen (130) auf den Informationselementbehältnissen eines digitalen Verarbeitungssystems (101) der Vorrichtung gespeichert wird;
und dass:
- eine Verarbeitung des Operationsregisters (130) durch das digitale Verarbeitungssystem (101) relationale Verbindungen (231) zwischen den Informationselementquellen (115) bestimmt.

2. Verfahren nach Anspruch 1, aufweisend einen vorherigen Initialisierungsschritt der Behältnis- und Informationselementquellenbank (110).

3. Verfahren nach Anspruch 1 oder Anspruch 2, wobei die Nomenklatur vorher festgelegter Operationen (150) auf den Informationselementbehältnissen folgende Operationen ganz oder teilweise aufweist:
- Schaffen eines Informationselementbehältnisses infolge des Versands eines digitalen Informationselements an die Vorrichtung oder eines Verweises auf eine Informationselementquelle;
- Auswählen eines Informationselementbehältnisses für die visuelle Anzeige seines Inhalts;
- Bedienen der visuellen Darstellung eines Informationselementbehältnisses;
- Bedienen der visuellen Darstellung eines Inhalts eines Informationselementbehältnisses;
- Duplizieren eines Informationselementbehältnisses;
- Anreichern eines Informationselementbehältnisses;
- Schließen der visuellen Darstellung eines Informationselementbehältnisses;
- Editieren des Inhalts eines Informationselementbehältnisses;
- manuelles Schaffen von Verbindungen zwischen Informationselementbehältnissen;
- Versenden eines Informationselementbehältnisses auf eine andere lokale oder entfernte Anzeigefläche.

4. Verfahren nach einem der vorangehenden Ansprüche, wobei mindestens eine im Operationsregister (130) gespeicherte Operation (131) auf den Informationselementbehältnissen mindestens ein in der Operationsnomenklatur (150) definiertes Strukturargument aufweist, wobei Werte des mindestens einen Arguments von dem digitalen Verarbeitungssystem (101) in Abhängigkeit von Durchführungsbedingungen der mindestens einen Operation auf den Informationselementbehältnissen bestimmt werden, die von dem digitalen Verarbeitungssystem beobachtbar ist.

5. Verfahren nach einem der vorangehenden Ansprüche, wobei alle oder ein Teil der relationalen Verbindungen (231) im Ergebnis der Verarbeitung des Operationsregisters (130) eine Relation zwischen mindestens zwei Informationselementquellen (115) folgenden Typs ist:
- **"Anteriorität",** wenn die Namen von zwei Informationselementquellen identisch sind, sich aber die in den zwei Informationselementbehältnissen angezeigten Inhalte zwischen einer ersten und einer zweiten Anzeige verändert haben;
- **"sequentiell"** zwischen zwei Informationselementquellen, deren zwei Informationselementbehältnisse aufeinanderfolgend Gegenstand von Interaktionen mindestens eines Benutzers mit dem Informationselementbehältnis waren;
- **"parallel"** zwischen den Informationselementquellen, deren Informationselementbehältnisse Interaktionen mindestens eines Benutzers gleichzeitig unterzogen werden;
- **"räumlich"** zwischen den Informationselementquellen, deren Informationselementbehältnisse von mindestens einem Benutzer absichtlich angenähert werden;
- **"Benutzung"** zwischen zwei Informationselementquellen, von denen ein Großteil der Anzeigezeiten von zugeordneten Informationselementbehältnissen über denselben Zeitraum einer vorher festgelegten Dauer erfolgte;
- **"Übereinanderlagerung"** zwischen Informationselementquellen, wenn Informationselementbehältnisse, die diesen Quellen entsprechen, übereinandergelegt und Transparenzparametern zugeordnet wurden, die gestatten, die Informationselemente von unteren Schichten durch auf die unteren Schichten aufgelegte obere Schichten zu erhalten;
- **"Anmerkung"** zwischen zwei Informationselementquellen, wenn eine manuelle Anmerkung von mindestens einem Benutzer zwischen den Quellen zugeordneten Informationselementbehältnissen durchgeführt wurde;
- **"Aufnahme"** zwischen Informationselementquellen, deren Informationselemente sämtlich in einer einzigen Bildschirmaufnahme inbegriffen sind, die von einem Bediener auf Informationselementbehältnissen durchgeführt wurde, die diesen Quellen entsprechen;
- **"hierarchisch"** zwischen zwei Informationselementquellen, von denen die eine das Ergebnis einer Extraktion eines Informationselementbehältnisses ist, das aus dem anderen Informationselementbehältnis extrahiert wurde, das der ursprünglichen Quelle entspricht;
- **"mengenoperativ"** zwischen jeder der Informationselementquellen, deren Informationselementbehältnisse, die diesen Quellen entsprechen, von den Benutzern manuell mittels eines Schnittstellenelements der Vorrichtung identifiziert wurden;
- **"informationell"** zwischen zwei Informationselementquellen, von denen die eine vom Typ Datei/Anmerkung ist und die der anderen zugeordnet wurde;
- **"Interaktion"** zwischen den verschiedenen Informationselementquellen, zwischen denen die Interaktionen auf Informationselementbehältnisse, die diesen Quellen entsprechen, dank einer Funktion geteilt werden, die in der Schnittstelle zugeordnet ist;
- **"bedingt"** zwischen zwei Informationselementquellen, von denen Informationselementbehältnisse, die den Quellen entsprechen, zwei unterschiedlichen Hypothesen entsprechen, die eine Alternative eröffnen.

6. Verfahren nach einem der vorangehenden Ansprüche, wobei eine Relation **"leer"** jeder Informationselementquelle (115) der Behältnis- und Informationselementquellenbank (110) zugeordnet ist, die während einer Sitzung nicht bedient wurde.

7. Verfahren nach einem der vorangehenden Ansprüche, wobei die Verarbeitung des Operationsregisters (130) durch das digitale Verarbeitungssystem (101) zur Bestimmung der relationalen Verbindungen (231) zwischen den Informationselementquellen (115) von dem digitalen Verarbeitungssystem (101) während derselben Sitzung nach jedem Speichern einer Operation (131) auf einem oder Informationselementbehältnissen im Operationsregister (130) automatisch oder wiederholend während einer Sitzung in Zeit- oder Anzahlintervallen definierter Operationsspeicherungen durchgeführt wird.

8. Verfahren nach einem der vorangehenden Ansprüche, wobei die relationalen Verbindungen von dem digitalen Verarbeitungssystem (101) oder von einem sekundären digitalen Verarbeitungssystem der Vorrichtung (100) verarbeitet werden, um eine visuelle Darstellung von allen oder einem Teil der Relationen herzustellen, wobei die visuelle Darstellung auf einem Visualisierungssystem interaktiv anzeigbar ist.

9. Vorrichtung (100) zum Inrelationversetzen einer Gruppe von Informationselementen, aufweisend ein digitales Verarbeitungssystem (101), eine Behältnis- und Informationselementquellenbank (110), Anzeigemittel (120) und Schnittstellenmittel (140), um einem Bediener zu gestatten, auf die Funktion der Vorrichtung einzuwirken, die funktional miteinander verbunden sind, wobei das digitale Verarbeitungssystem einen oder mehrere Prozessoren aufweist, die Datenspeicher und Programmspeicher aufweisen, und Verbindungsmittel mit der Informationselementbehältnisbank (110), mit den Anzeigemitteln (120) und mit den Schnittstellenmitteln (140) aufweist, wobei die Prozessoren, Speicher und Verbindungsmittel mit einem internen Kommunikationsbus oder internen Kommunikationsbussen (102) verbunden sind, um Befehle und/oder Daten auszutauschen, wobei das digitale Verarbeitungssystem (101) eine Architektur besitzt und Programmbefehlsspeicher aufweist, um funktional zu bilden:
- mindestens eine Verwaltungseinheit (160), die mit der Behältnis- und Informationselementquellenbank (110) verbunden ist und für die Verwaltung der Informationselementbehältnisse der Bank zuständig ist;
- mindestens eine Anzeigeverwaltungseinheit (162), die mit den Anzeigemitteln (120) verbunden ist, um Inhalte von den Informationselementbehältnissen (111) und die Ergebnisse von Aktionen von Bedienern auf die Inhalte oder Informationselementbehältnisse anzuzeigen, wobei ein Informationselementbehältnis einer unitären Informationselementpräsentation für einen Bediener entspricht, die eine visuelle Darstellung eines numerischen Informationselements bietet;
- mindestens eine Interpretationseinheit der Interaktionen (161), die mit den Schnittstellenmitteln (140) verbunden ist, um die von Bedienern auf die Schnittstellenmittel durchgeführten Aktionen zu interpretieren;
**dadurch gekennzeichnet, dass** das digitale Verarbeitungssystem (101) ebenfalls aufweist:
- mindestens eine Operationsverarbeitungseinheit (163), die organisiert ist, um die von Bedienern auf den Schnittstellenmitteln durchgeführten Aktionen zu analysieren, von den Aktionen diejenigen zu identifizieren, die einer vorher festgelegten, in einer Nomenklatur (150) von Operationen auf den vorher festgelegten Informationselementbehältnissen gelisteten Operation (151) auf den Informationselementbehältnissen entsprechen, und um jede Operation (131), die in einem Operationsregister (130) identifiziert ist, auf den Informationselementbehältnissen zu speichern;
- mindestens eine Syntheseeinheit (164), die eine Interpretation der Operationen auf den Informationselementbehältnissen und ihrer Verkettungen durchführt, um relationale Verbindungen (231) zwischen Informationselementquellen (115) zu identifizieren.

10. Vorrichtung nach Anspruch 9, wobei das digitale Verarbeitungssystem (101) mindestens eine Aktionseinheit (170) aufweist oder funktional mit einer externen Aktionseinheit verbunden ist, wobei die mindestens eine Aktionseinheit auf Hard- und Softwareebenen organisiert ist, um auf die Inhalte der Informationselementbehältnisse (111) einzuwirken und insbesondere um die Inhalte anzuzeigen oder zu verändern.

11. Vorrichtung nach einem der Ansprüche 9 oder 10, wobei das digitale Verarbeitungssystem (101) mindestens eine Kommunikationseinheit (180) aufweist, die ausgelegt ist, um die Verbindung eines Rechners (121) als Anzeigeendgerät der Vorrichtung (100) und/oder als Schnittstellenmittel der Vorrichtung (100) zu gestatten.

12. Vorrichtung nach einem der Ansprüche 9 bis 11, wobei das digitale Verarbeitungssystem (101) mindestens eine Kommunikationseinheit (180) aufweist, die ausgelegt ist, um die Verbindung von mindestens einer entfernten Vorrichtung, die der Vorrichtung (100) entspricht, derart zu gestatten, dass die mindestens zwei Vorrichtungen im Spiegelmodus arbeiten.

## Claims

1. Method (200) for connecting information sources, said information sources (115) being referenced in an information container and source base (110), wherein information containers (111) generated from said information sources are manipulated, by one or more operators during a session, using a device (100) enabling the operators to perform operations on the information containers, an information container corresponding to a form of unitary presentation of information, for the use of an operator, offering a visual representation of numerical information, said method being **characterised in that**:
- any operation (131) performed by an operator on an information container (111) and belonging to a type of operation (151) on the information containers identified in a nomenclature of predefined operations (150), is recorded by the device (100) in a register of the operations (130) on the information containers of a digital processing system (101) of said device;
and **in that**:
- a processing of the register of operations (130) by the digital processing system (101) determines relational links (231) between the information sources (115).

2. Method according to claim 1, including a prior step of initialising the information container and source base (110) .

3. Method according to claim 1 or claim 2, wherein the nomenclature of predefined operations (150) on the information containers includes all or some of the operations of:
- creating an information container following the sending of numerical information to the device or of a reference to an information source,
- selecting an information container for visual display of the content thereof;
- manipulating the visual representation of an information container;
- manipulating the visual representation of a content of an information container;
- duplicating an information container;
- enhancing an information container;
- closing the visual representation of an information container;
- editing the content of an information container;
- manually creating links between information containers;
- sending an information container onto another display surface, local or remote;

4. Method according to one of the preceding claims, wherein at least one operation (131) on the information containers recorded in the register of operations (130) includes at least one structure argument defined in the operation nomenclature (150), values of the at least one argument being determined by the digital processing system (101) according to conditions for performing said at least one operation on the information containers observable by said digital processing system.

5. Method according to one of the preceding claims, wherein all or some of the relational links (231) resulting from the processing of the register of operations (130) is a relationship between at least two information sources (115) of the following type:
- **"prior"** when the names of two information sources are identical but the contents displayed in the two information containers have changed between a first and a second display;
- **"sequential"** between two information sources the two information containers of which have been subject to interactions of at least one user with said information container consecutively;
- **"parallel"** between the information sources the information containers of which undergo interactions of at least one user simultaneously;
- **"spatial"** between the information sources the information containers of which are intentionally brought together by at least one user;
- **"usage"** between two information sources wherein a major part of the time of displaying associated information containers has occurred over the same period of a predefined duration;
- **"superimposition"** between two information sources when information containers corresponding to these sources have been superimposed on each other and associated with transparency parameters making it possible to perceive the information of lower layers through higher layers superimposed on the lower layers;
- **"annotation"** between two information sources when a manual annotation has been implemented by at least one user between information containers associated with said sources;
- **"capture"** between information sources wherein information is all included in a single screen capture made by an operator on information containers corresponding to these sources;
- **"hierarchical"** between two information sources wherein one is the result of an extraction of an information container extracted from the other information container corresponding to the initial source;
- **"sets"** between each of the information sources wherein the information containers corresponding to these sources have been identified manually by the users by means of an interface element of the device;
- **"informational"** between two information sources wherein one is of the text file/annotation type, and which has been associated with the other;
- **"interaction"** between the various information sources between which the interactions on information containers corresponding to these sources are shared by means of an associated function in the interface;
- **"conditional"** between two information sources, information containers of which correspond to said sources, correspond to two different hypotheses opening up an alternative.

6. Method according to one of the preceding claims, wherein an **"empty"** relationship is associated with any information source (115) of the information container and source base (110) that has not been manipulated during a session.

7. Method according to one of the preceding claims, wherein the processing of the register of operations (130) by the digital processing system (101) for determining relational links (231) between the information sources (115) is implemented automatically by the digital processing system (101) during the same session after each recording of an operation (131) on one or more information containers in the register of operations (130), or recurrently during a session at defined time intervals or number of recording of operations.

8. Method according to one of the preceding claims, wherein the relational links are processed by the digital processing system (101) or by a related digital processing system of the device (100) for constructing a visual representation of all or some of the relationships, said visual representation being able to be displayed interactively on a display system.

9. Device (100) for connecting a set of information including a digital processing system (101), an information container and source base (110), display means (120) and interface means (140), for enabling an operator to act on the operation of the device, interconnected functionally, said digital processing system including one or more processors, including data memories and program memories, and including means for connection to the information container base (110), to the display means (120) and to the interface means (140), said processors, memories and connection means being connected to one or more internal communication buses (102) for exchanging instructions and/or data, the digital processing system (101) being structured and including program-instruction memories for functionally constituting:
- at least one administration unit (160) connected to the information container and source base (110) and responsible for managing the information containers of said base;
- at least one display-management unit (162) connected to the display means (120) for displaying contents of information containers (111) and the results of actions of operators on said information contents or containers, an information container corresponding to a form of unitary presentation of information, for the use of an operator, offering a visual representation of numerical information;
- at least one interaction-interpretation unit (161) connected to the interface means (140) for interpreting the actions performed by operators on said interface means;
**characterised in that** the digital processing system (101) also includes:
- at least one operation-processing unit (163) organised to analyse the actions performed by operators on said interface means, to identify, among said actions, those that correspond to a predefined operation (151) on the information containers listed in a nomenclature (150) of operations on the predefined information containers, and to record each operation (131) on the information containers identified in an operations register (130);
- at least one synthesis unit (164) implementing an interpretation of the operations on the information containers and the concatenations thereof to identify relational links (231) between information sources (115).

10. Device according to claim 9, wherein the digital processing system (101) includes at least one action unit (170) or is functionally connected to an external action unit, said at least one action unit being organised on the hardware and software planes to act on the contents of the information containers (111) and in particular to display and/or modify said contents.

11. Device according to one of claims 9 or 10, wherein the digital processing system (101) includes at least one communication unit (180) configured to allow the connection of a computer (121) as display terminal of the device (100) and/or as interface means of the device (100) .

12. Device according to one of claims 9 to 11, wherein the digital processing system (101) includes at least one communication unit (180) configured to allow the connection of at least one remote device conforming to the device (100) so that the at least two devices operate in mirror mode.
